# EUROPEAN PATENT APPLICATION

(11) **EP 4 823 138 A1**
(43) Date of publication of application: **14.10.2026**
(21) Application number: 24906534.3
(22) Date of filing: 20.12.2024
(51) Int. Cl.: H04W 8/24

(54) **COMMUNICATION METHOD, COMMUNICATION APPARATUS, AND COMMUNICATION SYSTEM**

(30) Priority: 22.12.2023 CN 202311795610
(71) Applicant: Huawei Technologies Co., Ltd., Shenzhen, Guangdong 518129 (CN)
(72) Inventor: MA, Chuan, Shenzhen, Guangdong 518129 (CN); HAO, Jinping, Shenzhen, Guangdong 518129 (CN)
(74) Representative: Huawei European IPR
(86) International application number: PCT/CN2024/140986
(87) International publication number: WO 2025/131061

(57) **Abstract**

A communication method, a communication apparatus, and a communication system relate to the field of communication technologies. In the method, a first network element sends identity information of a second network element and function information of the second network element to a terminal device or a network device, wherein the function information of the second network element is used to indicate a function supported by the second network element, and the network device or the terminal device may determine, based on the function supported by the second network element, whether the second network element can still continue to serve as a selected network element. When the second network element can continue to serve as the selected network element, the terminal device or the network device does not need to trigger the first network element to perform network element selection again. In this way, overall overhead when the first network element performs network element selection can be effectively reduced.

## Description

This application claims priority to Chinese Patent Application No. 202311795610.0, filed with the China National Intellectual Property Administration on December 22, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and more specifically, to a communication method, a communication apparatus, and a communication system.

### BACKGROUND

Currently, a network device may communicate with another network element via an access and mobility management function (access and mobility management function, AMF) network element. For example, when a terminal device intends to send information to a network element, the terminal device sends information used for the AMF to perform network element selection to the network device, the network device forwards the information to the AMF, the AMF performs network element selection based on the information, and sends address information of the selected network element to the network device, and the network device sends the information that the terminal device intends to transmit to the network element based on the address information of the network element.

When the terminal device intends to send information to a network element again, the terminal device sends information used for the AMF to perform network element selection to the network device again, the network device forwards the information to the AMF again, the AMF performs network element selection based on the information again, and sends address information of the selected network element to the access network device, and the network device sends the information that the terminal device intends to transmit to the network element based on the address information of the network element.

When the network element with which the terminal device performs communication again is the same network element as the network element with which the terminal device previously performed communication, the foregoing procedure causes the AMF to perform unnecessary network element selection, resulting in high overall overhead when the AMF performs network element selection.

### SUMMARY

This application provides a communication method, a communication apparatus, and a communication system, which can support reducing overall overhead in performing network element selection.

According to a first aspect, a communication method is provided, comprising: sending first information to a first network element, where the first information is used to indicate information of a terminal device; and receiving, from the first network element, identity information of a second network element and function information of the second network element, where the second network element is a network element selected by the first network element based on the information of the terminal device, and the function information of the second network element is used to indicate a function supported by the second network element.

An entity executing the solution described in the first aspect may be a network device, or may be a module (such as a chip system) in the network device, or may be a logical node, a logical module, or software that can implement all or some functions of the network device. This is not limited. For ease of description, the following uses a network device as an example for description.

The function information of the second network element may be further used by the network device or the terminal device to determine whether to trigger the first network element to perform network element selection again.

In the foregoing technical solution, in addition to sending the identity information of the second network element to the network device, the first network element may also send the function information of the second network element to the network device, and the network device may determine, based on the function information of the second network element, the function supported by the second network element, and may determine, based on the function supported by the second network element, whether to trigger the first network element to perform network element selection again. For example, when the network device determines, based on the function supported by the second network element, that the second network element can still meet a communication requirement of the terminal device, the network device may directly forward the information that the terminal device intends to transmit to the second network element. In this way, the first network element does not need to perform network element selection again, which can effectively reduce overall overhead in performing network element selection.

In a possible implementation of the first aspect, the method further comprises: sending the identity information of the second network element and the function information of the second network element to the terminal device.

When the network device forwards the identity information of the second network element and the function information of the second network element to the terminal device, the terminal device may determine, based on the function information of the second network element, the function supported by the second network element, and may determine, based on the function supported by the second network element, whether the second network element can still continue to meet a communication requirement of the terminal device. When the terminal device determines that the second network element can still meet the communication requirement of the terminal device, the terminal device may determine that it is not necessary to trigger the first network element to perform network element selection again. In this way, overall overhead in performing network element selection can be effectively reduced.

In a possible implementation of the first aspect, the method further comprises: receiving second information from the terminal device, where the second information is used to indicate the identity information of the second network element; or receiving third information from the terminal device, where the third information is used for the first network element to perform network element selection.

When the second information sent by the terminal device to the network device is used to indicate the identity information of the second network element, the network device may determine, based on the identity information of the second network element indicated by the second information, that the second network element can still meet the communication requirement of the terminal device, and may determine that it is not necessary to trigger the first network element to perform network element selection again. In this way, overall overhead in performing network element selection can be effectively reduced.

When the third information sent by the terminal device to the network device is used for the first network element to perform network element selection, the network device may determine, based on the third information, that the second network element can no longer meet the communication requirement of the terminal device, and the network device may determine that it is necessary to trigger the first network element to perform network element selection again. In this way, completing communication between the terminal device and another network element can be supported.

In a possible implementation of the first aspect, the method further comprises: determining, based on fourth information and the function information of the second network element, whether the second network element is a network element continued to be selected, where the fourth information is used for the first network element to perform network element selection, and the fourth information is from the terminal device.

When the terminal device sends the fourth information to the network device, the network device may determine, based on the fourth information and the function information of the second network element, whether the second network element can still meet the communication requirement of the terminal device. For example, the network device determines, based on the fourth information, that the network element with which the terminal device intends to communicate needs to support function 1, and the function information of the second network element indicates that the second network element also supports function 1. The network device may determine, based on this, that the second network element can still continue to meet the communication requirement of the terminal device, and therefore it is not necessary to trigger the first network element to perform network element selection again. In this way, overall overhead in performing network element selection can be effectively reduced.

In a possible implementation of the first aspect, the determining whether the second network element is a network element continued to be selected comprises: determining that the second network element continues to be the selected network element, and sending fifth information to the second network element, where the fifth information is information that the terminal device needs to transmit to the second network element; or determining that the second network element is not the network element continued to be selected, and sending the fourth information to the first network element.

When the network device determines that the second network element can still meet the communication requirement of the terminal device, or in other words, when the network device determines that the second network element is the network element continued to be selected, the network device may directly send, to the second network element, the information that the terminal device intends to transmit to the second network element. In this way, it is not necessary to trigger the first network element to perform network element selection again, which can effectively reduce overall overhead in performing network element selection.

When the network device determines that the second network element can no longer meet the communication requirement of the terminal device, or in other words, when the network device determines that the second network element is not the network element continued to be selected, the network device may trigger the first network element to perform network element selection again. In this way, communication between the terminal device and another network element can be supported.

According to a second aspect, a communication method is provided, comprising: determining a second network element; and sending identity information of the second network element and function information of the second network element, where the function information of the second network element is used to indicate a function supported by the second network element. An execution body of the solution described in the second aspect may be a first network element, or may be a module (such as a chip system) in the first network element, or may be a logical node, a logical module, or software that can implement all or some functions of the first network element. This is not limited. For ease of description, the following uses a first network element as an example for description.

In the foregoing technical solution, the first network element may feed back the identity information of the second network element and the function information of the second network element, where the function information of the second network element can be used to indicate the function supported by the second network element, or in other words, the function information of the second network element can be used for the terminal device or the network device to determine whether the second network element can still meet a next communication requirement of the terminal device. The terminal device or the network device may determine, based on the function information of the second network element, whether the second network element can still meet the next communication requirement of the terminal device, to determine whether to trigger the first network element to perform network element selection again, which can effectively reduce overall overhead in performing network element selection. For example, when the terminal device or the network device determines, based on the function information of the second network element, that the second network element can still meet the next communication requirement of the terminal device, the terminal device or the network device may not need to trigger the first network element to perform network element selection again. In this way, overall overhead in performing network element selection can be reduced.

In a possible implementation of the second aspect, the determining a second network element comprises: receiving first information, where the first information is used to indicate information of a terminal device; and performing network element selection based on the information of the terminal device, and determining the second network element.

In this way, the first network element may determine, based on the information of the terminal device indicated by the first information, the network element with which the terminal device intends to communicate.

In a possible implementation of the second aspect, the sending identity information of the second network element and function information of the second network element comprises: sending the identity information of the second network element and the function information of the second network element to the terminal device; or sending the identity information of the second network element and the function information of the second network element to a network device.

When the first network element sends the identity information of the second network element and the function information of the second network element to the terminal device, the terminal device may determine, based on the function information of the second network element, the function supported by the second network element, and may determine, based on the function supported by the second network element, whether the second network element can still continue to meet a communication requirement of the terminal device. When the terminal device determines that the second network element can still meet the communication requirement of the terminal device, the terminal device determines that it is not necessary to trigger the first network element to perform network element selection again. In this way, overall overhead in performing network element selection can be effectively reduced.

When the first network element sends the identity information of the second network element and the function information of the second network element to the network device, the network device may determine, based on the function information of the second network element, the function supported by the second network element, and may determine, based on the function supported by the second network element, whether the second network element can still continue to meet the communication requirement of the terminal device. When the network device determines that the second network element can still meet the communication requirement of the terminal device, the network device determines that it is not necessary to trigger the first network element to perform network element selection again. In this way, overall overhead in performing network element selection can be effectively reduced.

According to a third aspect, a communication method is provided, comprising: sending first information, where the first information is used to indicate information of a terminal device; and receiving identity information of a second network element and function information of the second network element, where the second network element is a network element selected by a first network element based on the information of the terminal device, and the function information of the second network element is used to indicate a function supported by the second network element.

An execution body of the solution described in the third aspect may be a terminal device, or may be a module (such as a chip system) in the terminal device, or may be a logical node, a logical module, or software that can implement all or some functions of the terminal device. This is not limited. For ease of description, the following uses a terminal device as an example for description.

In the foregoing solution, after the terminal device sends the first information, the terminal device may receive the identity information of the second network element and the function information of the second network element, where the function information of the second network element is used to indicate the function supported by the second network element. The terminal device may determine, based on the function information of the second network element, whether the second network element can continue to be a network element with which the terminal device intends to communicate next time. When the terminal device determines that the second network element continues to be the network element with which the terminal device intends to communicate next time, the terminal device may determine that it is not necessary to trigger the first network element to perform network element selection again, which can effectively reduce overall overhead in performing network element selection.

In a possible implementation of the third aspect, the method further comprises: sending second information, where the second information is used to indicate the identity information of the second network element; or sending third information, where the third information is used for the first network element to perform network element selection.

When the second information sent by the terminal device to the network device is used to indicate the identity information of the second network element, the network device may determine, based on the identity information of the second network element indicated by the second information, that the second network element can still meet the communication requirement of the terminal device, and may determine that it is not necessary to trigger the first network element to perform network element selection again. In this way, overall overhead in performing network element selection can be effectively reduced.

When the third information sent by the terminal device to the network device is used for the first network element to perform network element selection, the network device may determine, based on the third information, that the second network element can no longer meet the communication requirement of the terminal device, and the network device may determine that it is necessary to trigger the first network element to perform network element selection again. In this way, completing communication between the terminal device and another network element can be supported.

With reference to any one of the first aspect, the second aspect, or the third aspect, in a possible implementation, that the function information of the second network element is used to indicate a function supported by the second network element comprises: the function information of the second network element is used to indicate a condition under which the second network element is valid.

The function information of the second network element is only an example of information, and may be replaced with another example of information. For example, the function information of the second network element may be replaced with selection condition information of the second network element, or validity information of the second network element, or validity maintenance information of the second network element, or the like. When the function information of the second network element is used to indicate the condition under which the second network element is valid, the network device or the terminal device may determine, based on the condition under which the second network element is valid, whether the second network element can still be a network element with which the terminal device intends to communicate next time. When the terminal device or the network device determines, based on this, that the second network element can still be the network element with which the terminal device intends to communicate next time, the terminal device or the network device may determine that it is not necessary to trigger the first network element to perform network element selection again, which can effectively reduce overall overhead in performing network element selection.

With reference to any one of the first aspect, the second aspect, or the third aspect, in a possible implementation, the function information of the second network element comprises at least one of the following: a network slice allowed to be selected by the terminal device, a service type allowed to be selected by the terminal device, a service precision allowed to be selected by the terminal device, a quality of service allowed to be requested by the terminal device, a data network name allowed to be selected by the terminal device, or allowed location information of the terminal device.

In this way, the network device or the terminal device may determine, based on one or more of the foregoing, whether the second network element can continue to be the selected network element, and further determine whether to trigger the first network element to perform network element selection again. When the network device or the terminal device determines, based on one or more of the foregoing, that the second network element continues to be the selected network element, the terminal device or the network device may not need to trigger the first network element to perform network element selection again, which can effectively reduce overall overhead in performing network element selection.

With reference to any one of the first aspect, the second aspect, or the third aspect, in a possible implementation, the information of the terminal device comprises at least one of the following: a network slice selected by the terminal device, a service type selected by the terminal device, a service precision selected by the terminal device, a quality of service requested by the terminal device, a data network name selected by the terminal device, or location information of the terminal device.

In this way, the first network element may determine, based on one or more of the foregoing, the network element with which the terminal device intends to communicate.

With reference to any one of the first aspect, the second aspect, or the third aspect, in a possible implementation, the identity information of the second network element comprises at least one of the following: identification information of the second network element, an Internet Protocol address of the second network element, or a fully qualified domain name of the second network element.

In this way, the network device may determine, based on one or more of the foregoing, the network element with which the terminal device intends to communicate.

According to a fourth aspect, a communication system is provided. The communication system comprises: a network device and a first network element. The network device is configured to send first information to the first network element, where the first information is used to indicate information of a terminal device. The first network element is configured to receive the first information, and send, to the network device, identity information of a second network element and function information of the second network element, where the second network element is a network element selected by the first network element based on the information of the terminal device, and the function information of the second network element is used to indicate a function supported by the second network element. The network device is further configured to receive the identity information of the second network element and the function information of the second network element.

The access network device and the first network element may be further configured to respectively perform the methods described in the first aspect and the second aspect.

According to a fifth aspect, a communication apparatus is provided. The communication apparatus may be a network device, or may be a device or module for performing functions of the network device, or the like.

In a possible implementation, the communication apparatus may comprise modules or units in one-to-one correspondence with the methods/operations/steps/actions described in the first aspect. The modules or units may be hardware circuits, or may be software, or may be implemented by hardware circuits in combination with software.

According to a sixth aspect, a communication apparatus is provided. The communication apparatus may be a first network element, or may be a device or module for performing functions of the first network element, or the like.

In a possible implementation, the communication apparatus may comprise modules or units in one-to-one correspondence with the methods/operations/steps/actions described in the second aspect. The modules or units may be hardware circuits, or may be software, or may be implemented by hardware circuits in combination with software.

According to a seventh aspect, a communication apparatus is provided. The communication apparatus may be a terminal device, or may be a device or module for performing functions of the terminal device, or the like.

In a possible implementation, the communication apparatus may comprise modules or units in one-to-one correspondence with the methods/operations/steps/actions described in the third aspect. The modules or units may be hardware circuits, or may be software, or may be implemented by hardware circuits in combination with software.

According to an eighth aspect, a communication apparatus is provided. The communication apparatus comprises: an interface unit, configured to send first information to a first network element, where the first information is used to indicate information of a terminal device; and the interface unit, further configured to receive, from the first network element, identity information of a second network element and function information of the second network element, where the second network element is a network element selected by the first network element based on the first information, and the function information of the second network element is used to indicate a function supported by the second network element.

The communication apparatus may be further configured to perform the solution described in the first aspect and any possible manner of the first aspect. Details are not described again.

According to a ninth aspect, a communication apparatus is provided. The communication apparatus comprises: a processing unit, configured to determine a second network element; and an interface unit, configured to send identity information of the second network element and function information of the second network element, where the second network element is a network element selected by a first network element based on information of a terminal device, and the function information of the second network element is used to indicate a function supported by the second network element.

The communication apparatus may be further configured to perform the solution described in the second aspect and any possible manner of the second aspect. Details are not described again.

According to a tenth aspect, a communication apparatus is provided. The communication apparatus comprises: an interface unit, configured to send first information, where the first information is used to indicate information of a terminal device; and the interface unit, further configured to receive identity information of a second network element and function information of the second network element, where the second network element is a network element selected by a first network element based on the information of the terminal device, and the function information of the second network element is used to indicate a function supported by the second network element.

The communication apparatus may be further configured to perform the solution described in the third aspect and any possible manner of the third aspect. Details are not described again.

According to an eleventh aspect, a communication apparatus is provided, comprising a processor. The processor is configured to, by executing a computer program or instructions, or by using a logic circuit, enable the communication apparatus to perform the method described in the first aspect and any possible manner of the first aspect; or enable the communication apparatus to perform the method described in the second aspect and any possible manner of the second aspect; or enable the communication apparatus to perform the method described in the third aspect and any possible manner of the third aspect.

In a possible implementation, the communication apparatus further comprises a memory, configured to store the computer program or instructions.

In a possible implementation, the communication apparatus further comprises a communication interface, configured to input and/or output a signal.

According to a twelfth aspect, a communication apparatus is provided, comprising a logic circuit and an input/output interface. The input/output interface is configured to input and/or output a signal. The logic circuit is configured to perform the method described in the first aspect and any possible manner of the first aspect; or the logic circuit is configured to perform the method described in the second aspect and any possible manner of the second aspect; or the logic circuit is configured to perform the method described in the third aspect and any possible manner of the third aspect.

According to a thirteenth aspect, a computer-readable storage medium is provided. The computer-readable storage medium stores a computer program or instructions. When the computer program or the instructions are run on a computer, the method described in the first aspect and any possible manner of the first aspect is performed; or the method described in the second aspect and any possible manner of the second aspect is performed; or the method described in the third aspect and any possible manner of the third aspect is performed.

According to a fourteenth aspect, a computer program product is provided, comprising instructions. When the instructions are run on a computer, the method described in the first aspect and any possible manner of the first aspect is performed; or the method described in the second aspect and any possible manner of the second aspect is performed; or the method described in the third aspect and any possible manner of the third aspect is performed.

According to a fifteenth aspect, a chip system is provided. The chip is connected to a memory. The chip is configured to read and execute a software program stored in the memory, to perform the method described in the first aspect and any possible manner of the first aspect; or to perform the method described in the second aspect and any possible manner of the second aspect; or to perform the method described in the third aspect and any possible manner of the third aspect.

According to a sixteenth aspect, a chip system is provided. The chip system comprises: a communication interface, configured to communicate with another apparatus; and a processor, configured to enable a communication device in which the chip system is installed to perform the method described in the first aspect and any possible manner of the first aspect; or configured to enable a communication device in which the chip system is installed to perform the method described in the second aspect and any possible manner of the second aspect; or configured to enable a communication device in which the chip system is installed to perform the method described in the third aspect and any possible manner of the third aspect.

According to a seventeenth aspect, a chip system is provided. The chip system comprises a processor, a memory, and an input/output port. The memory is configured to store a computer program. The processor is configured to execute the computer program stored in the memory, so that the processor performs the method described in the first aspect and any possible manner of the first aspect; or so that the processor performs the method described in the second aspect and any possible manner of the second aspect; or so that the processor performs the method described in the third aspect and any possible manner of the third aspect.

According to an eighteenth aspect, a chip system is provided. The chip system is applied to an electronic device. The chip system comprises one or more processors. The processor is configured to invoke computer instructions so that the electronic device performs the method described in the first aspect and any possible manner of the first aspect; or the processor is configured to invoke computer instructions so that the electronic device performs the method described in the second aspect and any possible manner of the second aspect; or the processor is configured to invoke computer instructions so that the electronic device performs the method described in the third aspect and any possible manner of the third aspect.

For description of beneficial effects of any one of the fourth aspect to the eighteenth aspect, refer to the description of the beneficial effects of the first aspect, the second aspect, and the third aspect.

### BRIEF DESCRIPTION OF DRAWINGS

FIG. 1 is a schematic diagram of a communication system to which an embodiment of this application is applicable.
FIG. 2 is a schematic diagram of a network architecture to which an embodiment of this application is applicable.
FIG. 3 is a schematic flowchart of interaction of a communication method according to an embodiment of this application.
FIG. 4 is a schematic flowchart of interaction of another communication method according to an embodiment of this application.
FIG. 5 is a schematic flowchart of interaction of still another communication method according to an embodiment of this application.
FIG. 6 is a schematic block diagram of a communication apparatus according to an embodiment of this application.
FIG. 7 is a schematic block diagram of another communication apparatus according to an embodiment of this application.

### DESCRIPTION OF EMBODIMENTS

The following describes the technical solutions in this application with reference to the accompanying drawings.

To facilitate understanding of the embodiments of this application, the following several descriptions are first provided.
1. In this application, unless otherwise specified, "multiple" or "at least two" means two or more.
2. In the embodiments of this application, unless otherwise specified and there is a logical conflict, terms and/or descriptions between different embodiments are consistent and may be referenced to each other, and technical features in different embodiments may be combined based on their inherent logical relationships to form new embodiments.
3. Various numerical numbers in this application are merely differentiation for ease of description and are not used to limit the protection scope of this application. The magnitudes of the sequence numbers in this application do not mean the order of execution. The execution order of each process should be determined based on its function and inherent logic. For example, the terms "first", "second", "third", "fourth", and various other term labels (if any) in the specification, claims, and accompanying drawings of this application are used to distinguish similar objects and are not necessarily used to describe a specific order or sequence. The data used in this way are interchangeable in appropriate circumstances, so that the embodiments described herein can be implemented in an order other than that illustrated or described herein.
   In the meantime, any embodiment or design solution described as "for example" in this application should not be interpreted as being more preferred or more advantageous than other embodiments or design solutions. Specifically, the use of the word "for example" or the like is intended to present related concepts in a specific manner for ease of understanding.
4. The terms "comprise" and "have" and any variations thereof are intended to cover non-exclusive inclusion. For example, a process, method, system, product, or device that includes a series of steps or units is not necessarily limited to those clearly listed steps or units, but may include other steps or units that are not clearly listed or that are inherent to such process, method, product, or device.
5. In this application, "is used to indicate" may be understood as "enable", and "enable" may comprise direct enabling and indirect enabling. When it is described that a piece of information is used to enable A, this may comprise that the information directly enables A or indirectly enables A, and does not represent that the information necessarily carries A.
   Information enabled by information is referred to as to-be-enabled information. In a specific implementation process, there are many manners of enabling the to-be-enabled information. For example, but not limited to, the to-be-enabled information may be directly enabled, such as the to-be-enabled information itself or an index of the to-be-enabled information. The to-be-enabled information may also be indirectly enabled by enabling other information, where there is an association relationship between the other information and the to-be-enabled information. Only a part of the to-be-enabled information may be enabled, while other parts of the to-be-enabled information are known or agreed upon in advance. For example, enabling specific information may also be implemented by means of a pre-agreed (for example, stipulated in a protocol) arrangement order of various information, thereby reducing enabling overhead to a certain extent. In the meantime, common parts of various information may be identified and uniformly enabled, to reduce enabling overhead caused by separately enabling the same information.
6. In this application, "preconfigured" may comprise predefined, for example, defined in a protocol. "Predefined" may be implemented by pre-storing corresponding code, a table, or other information that can be used to indicate related information in a device (for example, comprising various network elements). This application does not limit a specific implementation manner thereof.
7. "Storage" or "saving" involved in this application may mean saving in one or more memories. The one or more memories may be separately disposed, or may be integrated into an encoder or a decoder, a processor, or a communication apparatus. The one or more memories may also be partially separately disposed and partially integrated into a decoder, a processor, or a communication apparatus. A type of the memory may be any form of storage medium, and this is not limited.
8. A "protocol" involved in this application may refer to a standard protocol in the communication field. For example, the protocol may comprise 4th generation (4G) network, 5th generation (5G) network protocols, new radio (new radio, NR) protocols, 5.5G network protocols, 6th generation (6G) network protocols, and related protocols applied to future communication systems. This application imposes no limitation on this.
9. In the schematic diagrams in the accompanying drawings of the specification of this application, arrows or blocks shown by dashed lines represent optional steps or optional modules.
10. In this application, unless otherwise specified, "/" indicates that the objects associated before and after are in an "or" relationship. For example, A/B may represent A or B. In this application, "and/or" is merely an association relationship describing associated objects, indicating that three relationships may exist. For example, A and/or B may represent three cases: only A exists, both A and B exist, and only B exists, where A and B may be singular or plural.
11. In this application, indication comprises direct indication (also referred to as explicit indication) and implicit indication. Directly indicating information A means comprising the information A. Implicitly indicating information A means indicating the information A by using a correspondence between information A and information B and directly indicating the information B. The correspondence between the information A and the information B may be predefined, pre-stored, pre-burned, or preconfigured.
12. In this application, information C being used for determining information D comprises both determining the information D based only on the information C and determining the information D based on the information C and other information. In addition, the information C being used for determining the information D may also be a case of indirect determination, for example, the information D is determined based on information E, and the information E is determined based on the information C.
13. In this application, "apparatus A sends information A to apparatus B" may be understood as that a destination of the information A or an intermediate network element in a transmission path to the destination is apparatus B, and may comprise directly or indirectly sending the information to apparatus B.
14. In this application, "apparatus B receives information A from apparatus A" may be understood as that a source of the information A or an intermediate network element in a transmission path from the source is apparatus A, and may comprise directly or indirectly receiving the information from apparatus A. The information may be subjected to necessary processing, such as format change, between the source and the destination at which the information is sent, but the destination can understand valid information from the source. Similar expressions in this application may be understood in a similar manner, and are not described herein again.

First, a communication system to which the embodiments of this application are applicable is described.

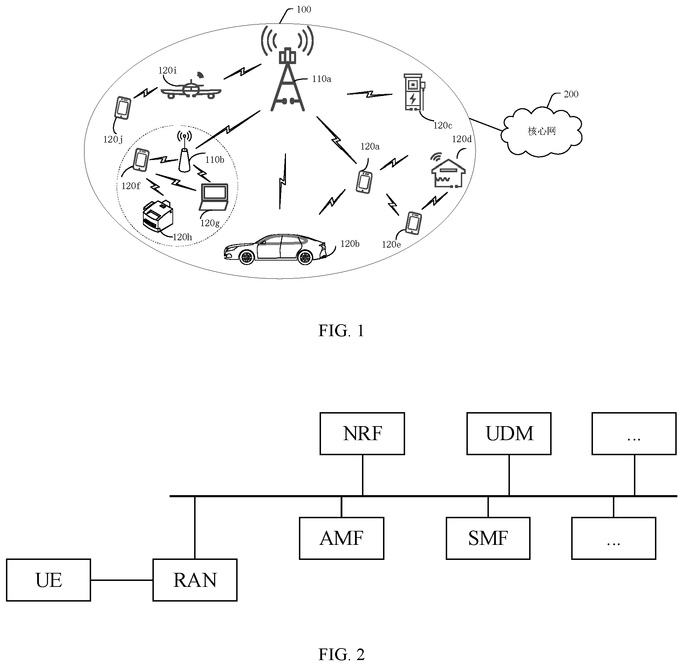

FIG. 1 is a schematic diagram of a communication system to which an embodiment of this application is applicable. As shown in FIG. 1, the communication system comprises: a radio access network (radio access network, RAN) 100 and a core network (core network, CN) 200. The RAN 100 comprises at least one RAN node (such as 110a and 110b, collectively referred to as 110) and at least one terminal device (such as 120a-120j, collectively referred to as 120). The RAN 100 may further comprise other RAN nodes, for example, a wireless relay device and/or a wireless backhaul device (not shown in FIG. 1), and the like. The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device integrating a core network logical function and a radio access network logical function.

The RAN 100 may be a 3GPP-related cellular system, for example, a 4G or 5G mobile communication system, or a future-oriented evolved system (for example, a 6G mobile communication system). The RAN 100 may also be an open radio access network (open radio access network, O-RAN or ORAN), a cloud radio access network (cloud radio access network, C-RAN), or a WiFi system. The RAN 100 may also be a communication system in which two or more of the foregoing systems are integrated.

The RAN node 110, which may also be referred to as an access network device, a RAN entity, an access node, or the like, constitutes a part of the communication system and is used to help the terminal device implement wireless access. The plurality of RAN nodes 110 in the communication system may be nodes of a same type, or may be nodes of different types. In some scenarios, roles of the RAN node 110 and the terminal device 120 are relative. For example, a network element 120i may be a helicopter or an unmanned aerial vehicle, which may be configured as a mobile base station. For a terminal device 120j that accesses the RAN 100 through the network element 120i, the network element 120i is a base station; but for a base station 110a, the network element 120i is a terminal device. The RAN node 110 and the terminal device 120 are both sometimes referred to as communication apparatuses. For example, network elements 110a and 110b may be understood as communication apparatuses having a base station function, and network elements 120a-120j may be understood as communication apparatuses having a terminal function.

In a possible scenario, the RAN node may be a base station (base station, BS), an eNodeB, an access point (access point, AP), a transmitting and receiving point (transmitting and receiving point, TRP), a gNB, a next-generation base station in a 6G mobile communication system, a base station in a future mobile communication system, an access node in a WiFi system, or the like. The RAN node may be a macro base station (such as 110a in FIG. 1), a micro base station or an indoor base station (such as 110b in FIG. 1), a relay node or a donor node, or a radio controller in a CRAN scenario.

Optionally, the RAN node may be a server, a wearable device, a vehicle or a vehicle-mounted device, or the like. All or some functions of the RAN node in this application may also be implemented by software functions running on hardware, or by virtualized functions instantiated on a platform (for example, a cloud platform). The RAN node in this application may also be a logical node, a logical module, or software that can implement all or some functions of the RAN node.

In another possible scenario, a plurality of RAN nodes cooperate to assist the terminal device in implementing wireless access, and different RAN nodes respectively implement some functions of the base station. For example, the RAN node may be a CU, a DU, a CU-control plane (control plane, CP), a CU-user plane (user plane, UP), or a radio unit (radio unit, RU), and the like. The CU and the DU may be separately disposed, or may be comprised in a same network element, for example, a baseband unit (baseband unit, BBU). The RU may be comprised in a radio frequency device or a radio frequency unit, for example, comprised in a remote radio unit (remote radio unit, RRU), an active antenna unit (active antenna unit, AAU), or a remote radio head (remote radio head, RRH).

In different communication systems, the CU (or CU-CP and CU-UP), the DU, or the RU may also have different names. However, a person skilled in the art can understand the meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses CU, CU-CP, CU-UP, DU, and RU as examples for description. Any unit among the CU (or CU-CP, CU-UP), the DU, and the RU in this application may be implemented by a software module, a hardware module, or a combination of a software module and a hardware module.

It should be understood that the quantities of various devices in the foregoing communication system are merely illustrative, and are not limited thereto. In actual application, the communication system may further comprise more terminal devices, more RAN devices, and may further comprise other devices.

In the embodiments of this application, a terminal device is a device having a wireless transceiver function, and may refer to user equipment (user equipment, UE), an access terminal, a subscriber unit, a subscriber station, a mobile station, a remote station, a remote terminal, a mobile device, a user terminal, a wireless communication device, a user agent, or a user apparatus.

In the embodiments of this application, the terminal device may also be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, or a terminal device in a communication network evolved after 5G, and the like. This is not limited.

In the embodiments of this application, the terminal device may also be a device having a communication function in a 6G communication system. A form or type of the terminal device in 6G and other future communication systems is not limited.

In the embodiments of this application, a communication apparatus for implementing the function of the terminal device may be the terminal device, or may be an apparatus that can support the terminal device in implementing the function, for example, a chip system. The apparatus may be installed in the terminal device or used in cooperation with the terminal device. In this application, the chip system may be constituted by a chip, or may comprise a chip and other discrete devices.

In the embodiments of this application, a network device is a device having a wireless transceiver function, and is configured to communicate with a terminal device. The network device may be a node in a RAN, and may also be referred to as a base station, or may be referred to as a RAN node. The network device may be an evolved Node B (eNB or eNodeB) in long term evolution (long term evolution, LTE); or a base station in a 5G network such as a gNodeB (gNB) or a base station in a public land mobile network (public land mobile network, PLMN) evolved after 5G, a broadband network gateway (broadband network gateway, BNG), an aggregation switch, or a 3rd generation partnership project (3GPP) network device, and the like.

The RAN may be configured as a RAN defined by the 3GPP protocol, an O-RAN, a C-RAN, or the like. The network device may further comprise various forms of base stations, for example: a macro base station, a micro base station (also referred to as a small cell), a relay station, a TRP, a transmitting point (transmitting point, TP), a mobile switching center, and a device serving as a base station in device-to-device (device-to-device, D2D), vehicle-to-everything (vehicle-to-everything, V2X), or machine-to-machine (machine-to-machine, M2M) communication, a network device in a non-terrestrial network (non-terrestrial network, NTN), and the like. This is not specifically limited.

In the embodiments of this application, the network device may further comprise a network element or a module that implements a part of base station functions, for example, comprising one or more of the following: a centralized unit (centralized unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be simultaneously implemented by a baseband unit (baseband unit, BBU) of the base station. Functions of the RU may be implemented by a radio frequency device of the base station. For example, the radio frequency device of the base station may be a remote radio unit (remote radio unit, RRU), a pico remote radio unit (pRRU), an active antenna unit (active antenna unit, AAU), or another unit, module, or device having a radio frequency processing function, and the like. A communication interface protocol between the BBU and the radio frequency device may be a common public radio interface (common public radio interface, CPRI) interface protocol, an enhanced common public radio interface (eCPRI) interface protocol, or a fronthaul interface protocol between a DU and an RU in an O-RAN system, and the like. This is not limited.

In different communication systems, the CU (or CU-CP and CU-UP), the DU, or the RU may also have different names. However, a person skilled in the art can understand the meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses CU, CU-CP, CU-UP, DU, and RU as examples for description. Any unit among the CU (or CU-CP, CU-UP), the DU, and the RU in this application may be implemented by a software module, a hardware module, or a combination of a software module and a hardware module.

In the embodiments of this application, the network device may also be a device having a communication function in a 6G communication system. A form or type of the network device in 6G and other future communication systems is not limited.

In the embodiments of this application, a communication apparatus for implementing the function of the network device may be the network device, or may be an apparatus that can support the network device in implementing the function, for example, a chip system. The apparatus may be installed in the network device or used in cooperation with the network device. In the embodiments of this application, the chip system may be constituted by a chip, or may comprise a chip and other discrete devices.

The network device may comprise a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or some functions may be independently integrated and some functions may be integrated into the baseband apparatus. For example, in an LTE communication system, the network device comprises a baseband apparatus and a radio frequency apparatus. The radio frequency apparatus may be disposed remotely relative to the baseband apparatus. For example, an RRU is a remote radio unit disposed relative to a BBU.

Communication between the network device and the terminal device follows a specific protocol layer structure. For example, a control plane protocol layer structure may comprise functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may comprise functions of protocol layers such as a PDCP layer, an RLC layer, a MAC layer, and a physical layer. In a possible implementation, a service data adaptation protocol (service data adaptation protocol, SDAP) layer may be further comprised above the PDCP layer.

The network device may implement the functions of the protocol layers such as RRC, PDCP, RLC, and MAC by one node, or may implement the functions of these protocol layers by a plurality of nodes. For example, in an evolved structure, the network device comprises a CU and a DU, and a plurality of DUs are centrally controlled by one CU. For example, the CU and the DU may be divided based on the protocol layers of the wireless network. For example, the functions of the PDCP layer and protocol layers above the PDCP layer are set in the CU, and the functions of the protocol layers below the PDCP layer, for example, the RLC layer and the MAC layer, are set in the DU.

This division of the protocol layers is merely an example, and division may also be performed at other protocol layers. For example, division is performed at the RLC layer, where the functions of the RLC layer and protocol layers above the RLC layer are set in the CU, and the functions of the protocol layers below the RLC layer are set in the DU. Alternatively, division is performed within a protocol layer. For example, some functions of the RLC layer and functions of protocol layers above the RLC layer are set in the CU, and the remaining functions of the RLC layer and functions of protocol layers below the RLC layer are set in the DU. In addition, division may also be performed in other manners. For example, division is performed based on a latency, where a function whose processing time needs to meet a latency requirement is set in the DU, and a function that does not need to meet the latency requirement is set in the CU.

In addition, the radio frequency apparatus may be independently integrated without being placed in the DU, may also be integrated into the DU, or may be partially remotely disposed and partially integrated into the DU. This is not limited.

The network architecture and the service scenario described in this application are intended to describe the technical solutions in the embodiments of this application more clearly, and do not constitute a limitation on the technical solutions provided in this application. A person of ordinary skill in the art may know that with the evolution of the communication network architecture and the emergence of new service scenarios, the technical solutions provided in this application are also applicable to similar technical problems. For example, this application may be applicable to a V2X scenario.

The following describes a network architecture to which the embodiments of this application are applicable with reference to FIG. 2.

FIG. 2 is a schematic diagram of a network architecture to which an embodiment of this application is applicable. As shown in FIG. 2, for example, the network architecture comprises: a terminal device, a RAN, an AMF, a session management function (session management function, SMF) network element, a network repository function (network repository function, NRF) network element, a unified data management (unified data management, UDM) network element, and other network elements.

The AMF mainly performs functions such as mobility management, access authentication/authorization, and the like. In addition, the AMF is also responsible for transferring a user policy between the terminal device and a policy control function (policy control function, PCF) network element. In addition, the AMF may receive non-access stratum (non-access stratum, NAS) signaling (comprising mobility management (mobility management, MM) signaling and session management (session management, SM) signaling) of the terminal device and related signaling of the access network device (for example, base station granularity next generation (next generation, NG) 2 interface signaling interacted with the AMF), to complete a registration procedure of a user and forwarding of the SM signaling as well as mobility management.

The SMF is mainly used for session management, allocation and management of an Internet Protocol (Internet Protocol, IP) address of the terminal device, selection of a manageable user plane function, a termination point of a policy control and charging function interface, downlink data notification, and the like. The SMF may be further configured to complete procedures related to establishment, release, or update of a protocol data unit (protocol data unit, PDU) session.

The UDM mainly comprises the following functions: unified data management, supporting authentication credential processing in a 3GPP authentication and key agreement mechanism, user identity processing, access authorization, registration and mobility management, subscription management, short message management, and the like.

The NRF is responsible for maintaining network element service information, supporting accepting a network element registration service, and returning target network element service information based on a network element discovery request. Because the NRF may have interfaces with all service-oriented network elements (such as AMF, SMF, PCF, and the like) in the foregoing architecture, the NRF is not presented in the figure.

The network architecture shown in FIG. 2 may further comprise a PCF, a unified data repository (unified data repository, UDR) network element, an application function (application function, AF) network element, a network exposure function (network exposure function, NEF) network element, a data network (data network, DN) network element, an authentication server function (authentication server function, AUSF) network element, a short message service function (short message service function, SMSF) network element, and other network elements.

In the foregoing description, the foregoing network elements may be network elements in hardware devices, or may be software functions running on dedicated hardware, or may be virtualized functions instantiated on a platform (for example, a cloud platform). The foregoing function network elements may be divided into one or more services. Further, a service that exists independently of a network function may also emerge. An instance of the foregoing function network element, or an instance of a service comprised in the foregoing function network element, or a service instance that exists independently of the network function may all be referred to as a service instance.

Interfaces between the network elements shown in FIG. 2 are point-to-point interfaces. In actual implementation, interfaces between control plane network elements may also be service-oriented interfaces. For example, Npcf, Nudr, Nudm, Naf, Namf, and Nsmf are service-oriented interfaces respectively provided by the PCF, the UDR, the UDM, the AF, the AMF, and the SMF, and are used for invoking corresponding service-oriented operations.

The names of the network elements shown in FIG. 2 are merely names, and the names do not constitute a limitation on the functions of the network elements themselves. In a 5G network and another future network, the foregoing network elements may also have other names. This is not specifically limited in the embodiments of this application. For example, in a 6G network, some or all of the foregoing network elements may continue to use the terms in 5G, or may have other names, and so on. Unified description is provided herein, and details are not described below again.

In addition, the "network element" in this document may also be referred to as a network function instance, a network function (network function, NF), a device, an apparatus, a module, or the like. This application does not specifically limit this. In addition, the foregoing names are defined merely for ease of distinguishing different functions, and should not constitute any limitation. This application does not exclude the possibility of using other names in a 5G network and another future network. For example, in a 6G network, some or all of the foregoing networks may continue to use the terms in 5G, or may use other names. The interface names between the foregoing network elements are merely examples. In specific implementation, the interface names may be other names, and this is not specifically limited. In addition, the names of the messages (or signaling) transmitted between the foregoing network elements are also merely examples and do not constitute any limitation on the functions of the messages themselves.

In the network architecture shown in FIG. 2, the RAN has direct connection interfaces with other network elements of the core network control plane. For example, the RAN and all network elements of the core network control plane access a same bus, and the RAN may directly communicate with all the network elements. In this architecture, when the UE needs to send a message to another network element, the RAN may directly send the message to the corresponding network element, thereby reducing signaling detour.

In the network architecture shown in FIG. 2, the AMF may still perform the network element selection function. When the AMF performs network element selection in the network architecture shown in FIG. 2, the network architecture may have the technical problem described in the BACKGROUND section.

In view of this, this application provides a communication method, a communication apparatus, and a communication system, which can support reducing overall overhead in network element selection.

The following describes the communication method according to the embodiments of this application with reference to the accompanying drawings.

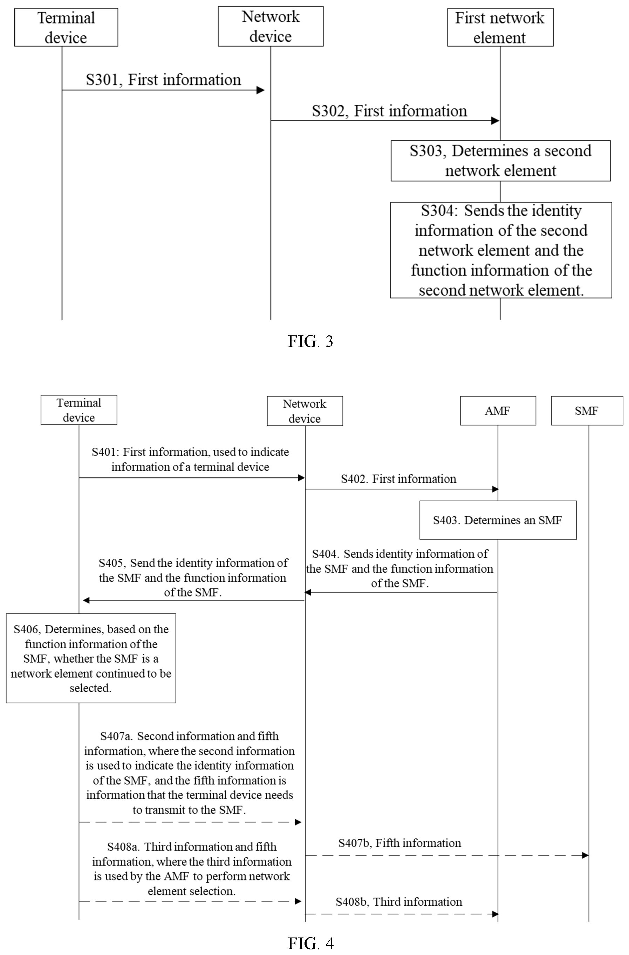

FIG. 3 is a schematic flowchart of interaction of a communication method according to an embodiment of this application. The method shown in FIG. 3 may be performed by a terminal device, a network device, and a first network element, or may be performed by modules and/or devices (for example, a chip, an integrated circuit, or the like) that are installed in the terminal device, the network device, and the first network element and that have corresponding functions. This is not limited. The following uses the terminal device, the network device, and the first network element as an example for description. As shown in FIG. 3, the method comprises:
S301. The terminal device sends first information to the network device.

Correspondingly, the network device receives the first information.

A message interacted between the terminal device and the network device may be a radio resource control (radio resource control, RRC) message. The first information may be carried in the RRC message. For example, the terminal device sends an RRC message to the network device, where the RRC message comprises the first information.

Optionally, the first information may alternatively be an RRC message. This is not limited.

S302. The network device sends the first information to the first network element.

Correspondingly, the first network element receives the first information.

When the AMF has the network element selection function, the first network element may be the AMF. When another network element (which is a network element other than the AMF) has the network element selection function, the first network element may be the another network element (which is a network element other than the AMF). This is not limited.

When the first network element is the AMF, a message interacted between the network device and the first network element may be an N2 message. The first information may be carried in the N2 message. For example, the network device sends an N2 message to the first network element, where the N2 message comprises the first information.

When the first network element is another network element, a message interacted between the network device and the first network element may be an Nx message (or may be another information name, and this is not limited). The first information may be carried in the Nx message. For example, the network device sends an Nx message to the first network element, where the Nx message comprises the first information.

When the network device sends the first information to the first network element, an information format of the first information may be changed. For example, the first information is carried in the RRC message, and the network device changes the format of the first information and carries the first information in the N2 message or the Nx message.

For ease of description, the following uses the first network element to refer to a network element having the network element selection function, which may correspond to the AMF or may correspond to another network element. This is not limited.

The first information can be used to indicate information of the terminal device (for example, information of the UE). The first network element may determine the information of the terminal device based on the first information, and may perform network element selection based on the information of the terminal device; or the first network element may perform network element selection with reference to the information of the terminal device, thereby determining the network element with which the terminal device intends to communicate. The network element with which the terminal device intends to communicate may also be referred to as a target network element of the terminal device. In other words, the first network element may determine the target network element of the terminal device based on or with reference to the information of the terminal device.

In a possible implementation, the information of the terminal device may comprise at least one of the following:
a network slice selected by the terminal device;
a service type selected by the terminal device;
a service precision selected by the terminal device;
a quality of service (quality of service, QoS) requested by the terminal device;
a data network name (data network name, DNN) selected by the terminal device; or
location information of the terminal device.

In this way, the first network element may determine, based on one or more of the foregoing, the network element with which the terminal device intends to communicate.

For example, the information of the terminal device comprises the network slice selected by the terminal device (for example, the network slice selected by the terminal device is network slice #1). The first network element may determine, based on the network slice selected by the terminal device, a network element that can support the network slice, and may determine the network element as the network element with which the terminal device intends to communicate.

For example, the information of the terminal device comprises the service type selected by the terminal device (for example, a speed sensing service, a direction sensing service, and so on). The first network element may determine, based on the service type selected by the terminal device, a network element that can support the service type, and may determine the network element as the network element with which the terminal device intends to communicate.

For example, the information of the terminal device comprises the service precision selected by the terminal device (for example, a direction/angle sensing error less than 10 degrees, a speed sensing error less than 1 m/s, and so on). The first network element may determine, based on the service precision selected by the terminal device, a network element that can support the service precision, and may determine the network element as the network element with which the terminal device intends to communicate.

For example, the information of the terminal device comprises the QoS requested by the terminal device (for example, a latency less than 1 ms, an aggregate rate greater than 100 Mbps, and so on). The first network element may determine, based on the QoS selected by the terminal device, a network element that can support the QoS, and may determine the network element as the network element with which the terminal device intends to communicate.

For example, the information of the terminal device comprises the DNN selected by the terminal device. The first network element may determine, based on the DNN selected by the terminal device, a network element that can support the DNN, and may determine the network element as the network element with which the terminal device intends to communicate.

For example, the information of the terminal device comprises the location information of the terminal device (for example, a cell in which the terminal device is located, horizontal and vertical coordinates of the terminal device, and so on). The first network element may determine, based on the location information of the terminal device, a network element that can support providing a service for a terminal device located within a location indicated by the location information, and may determine the network element as the network element with which the terminal device intends to communicate.

In this embodiment of this application, different network elements may respectively support different service types, service precisions, QoS, or data network names, and the like. When there are one or more network elements that support a same service type, service precision, QoS, or data network name, the first network element may feed back all network elements among the one or more network elements to the network device, or the first network element may feed back one network element among the one or more network elements to the network device. This is not limited. Therefore, the second network element described below may refer to one network element, or may refer to a plurality of network elements. This is not limited.

S303. The first network element determines the second network element.

The first network element may obtain function information and identity information of a plurality of network elements (comprising the second network element). For example, the first network element obtains information (profile) of several network elements, and the information may be used for the first network element to perform network element selection. The embodiments of this application do not limit a manner in which the first network element obtains the information of the several network elements. The information of the several network elements may be preconfigured for the first network element by a network manager, or may be sent by another network element to the first network element.

The embodiments of this application do not limit specific content of the information of the several network elements. For example, the information of the several network elements may be one or more of the following: an identifier of the network element, an address of the network element (the address may be an Internet Protocol (Internet Protocol, IP) address or a fully qualified domain name (fully qualified domain name, FQDN)), a network to which the network element belongs, a network slice corresponding to the network element, a service type supported by the network element, a quality of service supported by the network element, a DNN supported by the network element, location information of a terminal device corresponding to the network element (the location information may be a timing advance (timing advance, TA) of the terminal device), a load of the network element, a capacity of the network element, a priority of the network element, and so on.

In a possible implementation, the first network element may determine, based on the information of the terminal device, that the second network element is the network element with which the terminal device intends to communicate (or the target network element). In this way, the first network element may determine, based on the information of the terminal device indicated by the first information, the network element with which the terminal device intends to communicate.

In another possible implementation, the first network element may refer to the information of the terminal device when performing network element selection. For example, the first network element may determine, based on the information of the terminal device and other information (for example, a load of the network element), that the second network element is the network element with which the terminal device intends to communicate.

In still another possible implementation, the first network element may not refer to the information of the terminal device when performing network element selection. For example, the first apparatus may determine, based on other information (for example, information preconfigured by the network manager for the first apparatus indicates that a specific network element is to be selected within a specific time period, and the specific network element may be the second network element), that the second network element is the network element with which the terminal device intends to communicate.

In summary, the embodiments of this application do not limit a manner in which the first network element determines the second network element. The second network element is the network element with which the terminal device intends to communicate.

It should be noted that the second network element may also be a network element that can meet a communication requirement of the terminal device. For example, the terminal device intends to access network slice #1 for communication, the second network element supports network slice #1, and the second network element can meet the communication requirement of the terminal device.

S304. The first network element sends the identity information of the second network element and the function information of the second network element.

After the first network element determines the second network element, the first network element may feed back not only the identity information of the second network element, but also the function information of the second network element. The two may be carried in one piece of information, or may be carried in different pieces of information respectively. This is not limited. The function information of the second network element can be used to indicate the function supported by the second network element. In other words, the function information of the second network element can be used for the terminal device or the network device to determine whether the second network element can still meet a next communication requirement of the terminal device. The terminal device or the network device may determine, based on the function information of the second network element, whether the second network element can still meet the next communication requirement of the terminal device, to determine whether to trigger the first network element to perform network element selection again, which can effectively reduce overall overhead in performing network element selection. For example, when the terminal device or the network device determines, based on the function information of the second network element, that the second network element can still meet the next communication requirement of the terminal device, the terminal device or the network device may not need to trigger the first network element to perform network element selection again. In this way, overall overhead in performing network element selection can be reduced.

In a possible implementation, the first network element may send the identity information of the second network element and the function information of the second network element to the network device, and the network device may not forward the identity information of the second network element and the function information of the second network element to the terminal device. In this way, the network device may determine, based on the function information of the second network element, the function supported by the second network element, and may determine, based on the function supported by the second network element, whether to trigger the first network element to perform network element selection again. For example, when the network device determines, based on the function supported by the second network element, that the second network element can still meet the next communication requirement of the terminal device, the network device may directly forward the information that the terminal device intends to transmit to the second network element. In this way, the first network element does not need to perform network element selection again, which can intendeffectively reduce overall overhead in performing network element selection.

In another possible implementation, the first network element may send the identity information of the second network element and the function information of the second network element to the network device, and the network device may forward the identity information of the second network element and the function information of the second network element to the terminal device. In this way, the terminal device may determine, based on the function information of the second network element, whether the second network element can continue to be the network element with which the terminal device intends to communicate next time. When the terminal device determines that the second network element continues to be the network element with which the terminal device intends to communicate next time, the terminal device may determine that it is not necessary to trigger the first network element to perform network element selection again, which can effectively reduce overall overhead in performing network element selection.

The identity information of the second network element can be used to indicate an identity of the second network element. The network device may determine, based on the identity of the second network element, that the second network element is the network element with which the terminal device intends to communicate, and may forward, to the second network element, the to-be-transmitted information from the terminal device.

In a possible implementation, the identity information of the second network element may comprise at least one of the following:
identification information of the second network element;
an IP address of the second network element; or
an FQDN of the second network element.

In this way, the network device may determine, based on one or more of the foregoing, the network element with which the terminal device intends to communicate.

For example, the identity information of the second network element comprises the identification information of the second network element (for example, may comprise an identifier, an index, or other information that can distinguish the second network element of the second network element). The network device may determine the corresponding second network element based on the identification information of the second network element, and forward, to the second network element, the to-be-transmitted information from the terminal device.

For example, the identity information of the second network element comprises the IP address of the second network element. The network device may determine the second network element based on the IP address of the second network element, and forward, to the second network element, the to-be-transmitted information from the terminal device.

For example, the identity information of the second network element comprises the FQDN of the second network element. The network device may determine the second network element based on the FQDN of the second network element, and forward, to the second network element, the to-be-transmitted information from the terminal device.

The function information of the second network element can be used to indicate the function supported by the second network element, or the function information of the second network element can be further used for the terminal device or the network device to determine whether the second network element can still continue to meet the next communication requirement of the terminal device. After the terminal device or the network device obtains the function information of the second network element, the terminal device or the network device may determine the function supported by the second network element, and may determine, based on the function supported by the second network element, whether the network element with which the terminal device intends to communicate next time continues to be the second network element.

In a possible implementation, the function information of the second network element may comprise at least one of the following:
a network slice allowed to be selected by the terminal device;
a service type allowed to be selected by the terminal device;
a service precision allowed to be selected by the terminal device;
a quality of service allowed to be requested by the terminal device;
a data network name allowed to be selected by the terminal device; or
allowed location information of the terminal device.

In this way, the network device or the terminal device may determine, based on one or more of the foregoing, whether the second network element can continue to be the selected network element, and further determine whether to trigger the first network element to perform network element selection again. When the network device or the terminal device determines, based on one or more of the foregoing, that the second network element continues to be the selected network element, the terminal device or the network device may not need to trigger the first network element to perform network element selection again, which can effectively reduce overall overhead in performing network element selection.

For example, the function information of the second network element is used to indicate that the network slices allowed to be selected by the terminal device of the second network element comprise: network slice #1 and network slice #2. After the terminal device completes one information exchange with the second network element, when the terminal device intends to communicate with a network element supporting network slice #2, the second network element may be the network element with which the terminal device intends to communicate again, or the second network element can continue to meet the next communication requirement of the terminal device.

For example, the function information of the second network element is used to indicate that the service types allowed to be selected by the terminal device of the second network element comprise: service type #1 and service type #2. After the terminal device completes one information exchange with the second network element, when the terminal device intends to communicate with a network element supporting service type #2, the second network element may be the network element with which the terminal device intends to communicate again, or the second network element can continue to meet the next communication requirement of the terminal device.

For example, the function information of the second network element is used to indicate that the service precisions allowed to be selected by the terminal device of the second network element comprise: service precision #1 and service precision #2. After the terminal device completes one information exchange with the second network element, when the terminal device intends to communicate with a network element supporting service precision #2, the second network element may be the network element with which the terminal device intends to communicate intendagain, or the second network element can continue to meet the next communication requirement of the terminal device.

For example, the function information of the second network element is used to indicate that the QoS allowed to be selected by the terminal device of the second network element comprises: QoS #1 and QoS #2. After the terminal device completes one information exchange with the second network element, when the terminal device intends to communicate with a network element supporting QoS #2, the second network element may be the network element with which the terminal device intends to communicate again, or the second network element can continue to meet the next communication requirement of the terminal device.

For example, the function information of the second network element is used to indicate that the data network names allowed to be selected by the terminal device of the second network element comprise: data network name #1 and data network name #2. After the terminal device completes one information exchange with the second network element, when the terminal device intends to communicate with a network element supporting data network name #2, the second network element may be the network element with which the terminal device intends to communicate again, or the second network element can continue to meet the next communication requirement of the terminal device.

For example, the function information of the second network element is used to indicate that the location information allowed to be selected by the terminal device of the second network element comprises: location information #1 and location information #2. After the terminal device completes the first information exchange with the second network element, when the terminal device intends to communicate with a network element supporting location information #2, the second network element may be the network element with which the terminal device intends to communicate again, or the second network element can continue to meet the next communication requirement of the terminal device.

In a possible implementation, the function information of the second network element may be used to indicate that the second network element supports function 1 and function 2. After the terminal device performs one information exchange with the second network element, when the terminal device intends to communicate with a network element supporting function 2, the terminal device may determine, based on the function information of the second network element, that the second network element supports function 2, and then may determine that the second network element is a network element continued to be selected or determine that the second network element is the network element with which the terminal device intends to communicate again, or the second network element can continue to meet the next communication requirement of the terminal device, and may indicate, to the network device, to forward, to the second network element, the information intendthat the terminal device needs to transmit to the second network element.

In another possible implementation, when the terminal device intends to communicate with a network element supporting function 2, the terminal device may send, to the network device, information for performing network element selection, and the network device may determine, based on the information and the function information of the second network element, whether the second network element is a network element continued to be selected.

For example, the network device may determine, based on the information, that the terminal device intends to communicate with a network element supporting function 2, and the function information of the second network element indicates that the second network element supports function 2. The network device may determine that the second network element is the network element with which the terminal device intends to communicate. In other words, the network device may determine that the second network element is the network element continued to be selected. Correspondingly, the network device may forward the information from the terminal device to the second network element.

It should be noted that the function information of the second network element is only an example of information, and may be replaced with another example of information. For example, the function information of the second network element may be replaced with selection condition information of the second network element, or validity information of the second network element, or validity maintenance information of the second network element, or non-change condition information of the second network element, or condition information for not performing second network element reselection, and so on.

Optionally, the function information of the second network element may be further used to indicate a condition under which the second network element is valid. Correspondingly, the function information of the second network element may also be replaced with the selection condition information of the second network element, which may also be used to indicate the condition under which the second network element is valid.

When the function information of the second network element is replaced with the selection condition information of the second network element (which may also be used to indicate the condition under which the second network element is valid), the terminal device or the network device may determine, based on the selection condition information of the second network element, a condition for selecting the second network element (the condition under which the second network element is valid). For example, the selection condition of the second network element (or the condition under which the second network element is valid) may comprise:
1): the network slice selected by the terminal device is network slice #1 or network slice #2;
2): the service type selected by the terminal device is "speed sensing" or "direction sensing";
3): the speed sensing error requested by the terminal device is less than 1 m/s, or the direction/angle sensing error requested by the terminal device is less than 10 degrees;
4): the TA of the terminal device is less than 100 ms.

It should be noted that the foregoing conditions may be understood as: under certain conditions, the network element selected by the first network element does not change, and therefore it is not necessary to trigger the first network element to perform network element selection again, and so on. For description of the conditions, refer to the description in the previous paragraph. Details are not described again.

When the terminal device or the network device determines that the network element with which the terminal device intends to communicate again meets one or more of the foregoing conditions, the terminal device or the network device may determine that the second network element is the selected network element or determine that the second network element is the network element continued to be selected; or the terminal device or the network device may determine that the second network element can continue to meet the communication requirement of the terminal device.

When the terminal device or the network device determines that the network element with which the terminal device intends to communicate again does not meet the foregoing conditions, the terminal device or the network device may determine that the second network element is not the selected network element or determine that the second network element is not the network element continued to be selected; or the terminal device or the network device may determine that the second network element cannot continue to meet the communication requirement of the terminal device.

When the function information of the second network element is replaced with the validity information of the second network element, the terminal device or the network device may determine, based on the validity information of the second network element, that the second network element can continue to be the network element with which the terminal device intends to communicate. For description of the validity information of the second network element, refer to the foregoing example description of the selection condition of the second network element. Details are not described again.

Similarly, when the function information of the second network element is replaced with the validity maintenance information of the second network element, for description of the validity maintenance information of the second network element, refer to the foregoing example description of the selection condition of the second network element.

In summary, after the terminal device performs one information exchange with the second network element, the terminal device or the network device may determine, based on the function information of the second network element, whether the second network element can continue to serve as the network element with which the terminal device intends to communicate. When the second network element continues to be the selected network element, the terminal device or the network device does not need to trigger the first network element to perform network element selection, which helps reduce overall overhead when the first network element performs network element selection.

In the foregoing technical solution, in addition to sending the identity information of the second network element, the first network element may also send the function information of the second network element. The network device or the terminal device may determine, based on the function information of the second network element, the function supported by the second network element, and may determine, based on the function supported by the second network element, whether to trigger the first network element to perform network element selection again. For example, when the network device or the terminal device determines, based on the function supported by the second network element, that the second network element can still meet the communication requirement of the terminal device, the network device may directly forward the information that the terminal device intends to transmit to the second network element. In this way, the first network element does not need to perform network element selection again, which can effectively reduce overall overhead in performing network element selection.

In summary, through the foregoing technical solution, the embodiments of this application can reduce overall overhead in performing network element selection. For example, when the terminal device or the network device determines, based on the function information of the second network element, that the second network element is the network element continued to be selected, the network device or the terminal device does not need to trigger the first network element to perform network element selection again. In this way, overall overhead when the first network element performs network element selection can be reduced.

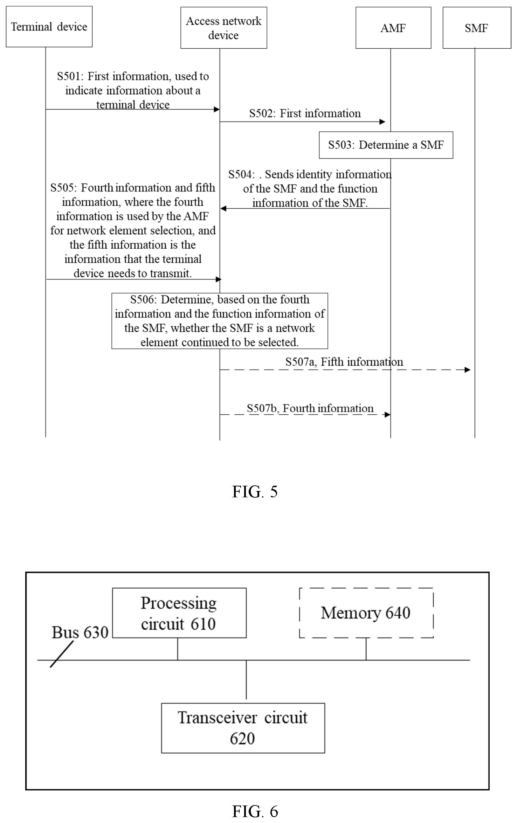

The following further describes the method described in FIG. 3 with reference to FIG. 4 and FIG. 5.

FIG. 4 is a schematic flowchart of interaction of another communication method according to an embodiment of this application. The method shown in FIG. 4 may be performed by a terminal device, a network device, an AMF (which is an example of a first network element), and an SMF (which is an example of a second network element), or may be performed by modules and/or devices (for example, a chip, an integrated circuit, or the like) that are installed in the terminal device, the network device, the AMF, and the SMF and that have corresponding functions. This is not limited. The following uses the terminal device, the network device, the AMF, and the SMF as an example for description. As shown in FIG. 4, the method comprises:
S401. The terminal device sends first information to the network device.

Correspondingly, the network device receives the first information.

S402. The network device sends the first information to the AMF.

Correspondingly, the AMF receives the first information.

For description of the first information, refer to the foregoing description. Details are not described again.

S403. The AMF determines an SMF.

For description of S403, refer to the foregoing description of S303. Details are not described again.

S404. The AMF sends identity information of the SMF and function information of the SMF to the network device.

Correspondingly, the network device receives the identity information of the SMF and the function information of the SMF.

S405. The network device sends the identity information of the SMF and the function information of the SMF to the terminal device.

Correspondingly, the terminal device receives the identity information of the SMF and the function information of the SMF.

When the network device forwards the identity information of the SMF and the function information of the SMF to the terminal device, the terminal device may determine, based on the function information of the SMF, a function supported by the SMF, and may determine, based on the function supported by the SMF, whether the SMF can still continue to meet a communication requirement of the terminal device. When the terminal device determines that the SMF can still meet the communication requirement of the terminal device, the terminal device may determine that it is not necessary to trigger the AMF to perform network element selection again. In this way, overall overhead in performing network element selection can be effectively reduced.

After the terminal device sends the first information, the terminal device may receive the identity information of the SMF and the function information of the SMF. The terminal device may determine, based on the function information of the SMF, whether the SMF can continue to be the network element with which the terminal device intends to communicate next time. When the terminal device determines that the SMF continues to be the network element with which the terminal device intends to communicate next time, the terminal device may determine that it is not necessary to trigger the AMF to perform network element selection again, which can effectively reduce overall overhead in performing network element selection.

S406. The terminal device determines, based on the function information of the SMF, whether the SMF is a network element continued to be selected.

After the terminal device and the SMF perform the first information exchange, the terminal device may determine, based on whether a function supported by the network element with which the terminal device intends to communicate again corresponds to the function supported by the SMF, whether the SMF is the network element continued to be selected. In other words, the terminal device may determine, based on the function information of the SMF, whether the SMF can continue to meet the communication requirement of the terminal device. For example, the communication requirement of the terminal device is: the terminal device intends to communicate with intenda network element supporting network slice #1, and the function information of the SMF indicates that the SMF further supports network slice #1. In this way, the SMF can still meet the communication requirement of the terminal device.intend

When the terminal device determines, based on the function information of the SMF, that the SMF is the network element continued to be selected, the terminal device may not trigger the AMF to perform network element selection again. In this way, overall overhead when the AMF performs network element selection can be reduced.

Optionally, the method may further comprise:

S407a. The terminal device sends second information and fifth information to the network device.

Correspondingly, the network device receives the second information and the fifth information. The second information is used to indicate the identity information of the SMF. The fifth information is information that the terminal device needs to transmit to the SMF.

When the terminal device intends to communicate with a network element, the terminal device may determine, based on the function information of the SMF, whether the SMF is the network element with which the terminal device intends to communicate again. When the terminal device determines, based on the function information of the SMF, that the SMF continues to be the network element with which the terminal device intends to communicate, the terminal device may send the second information to the network device, where the second information is used to indicate the identity information of the SMF, and the network device may determine, based on the second information, that the fifth information needs to be forwarded to the SMF.

In summary, when the second information sent by the terminal device to the network device is used to indicate the identity information of the SMF, the network device may determine, based on the identity information of the SMF indicated by the second information, that the SMF can still meet the communication requirement of the terminal device, and may determine that it is not necessary to trigger the AMF to perform network element selection again. In this way, overall overhead in performing network element selection can be effectively reduced.

S407b. The network device sends the fifth information to the SMF.

Correspondingly, the SMF receives the fifth information.

In this way, information exchange between the terminal device and the SMF can be completed.

Optionally, the method may further comprise:

S408a. The terminal device sends third information and fifth information to the network device.

Correspondingly, the network device receives the third information and the fifth information. The third information is used for the AMF to perform network element selection. The fifth information is information that the terminal device intends to transmit.

When the third information sent by the terminal device to the network device is used for the AMF to perform network element selection, the network device may determine, based on the third information, that the SMF can no longer meet the communication requirement of the terminal device, and the network device may determine that it is necessary to trigger the AMF to perform network element selection again. In this way, completing communication between the terminal device and another network element can be supported.

In a possible implementation, the third information may comprise information used to indicate performing network element selection. For example, the third information comprises indication information and the information of the terminal device, where the indication information is used to indicate, to the network device, that the SMF is not the network element continued to be selected, or the indication information is used to indicate, to the network device, that the terminal device has no selected network element, or the indication information may be used to indicate the network device to trigger the AMF to perform network element selection again. Correspondingly, the network device may determine, based on the indication information in the third information, that it is necessary to trigger the AMF to perform network element selection again.

When the terminal device intends to communicate with a network element, the terminal device may determine, based on the function information of the SMF, whether the SMF is the network element with which the terminal device intends to communicate. When the terminal device determines, based on the function information of the SMF, that the SMF is not the network element with which the terminal device intends to communicate, the terminal device may send the third information to the network device, where the third information is used for the AMF to perform network element selection. Correspondingly, the network device may determine, based on the third information, not to send the fifth information to the SMF, and send the third information to the AMF.

S408b. The network device sends the third information to the AMF.

Correspondingly, the AMF receives the third information.

The AMF may perform network element selection based on the third information, and send identity information and function information of a network element (for example, may be a third network element, and the like) selected by the AMF to the network device.

The method shown in FIG. 4 is described by taking an example in which the terminal device determines, based on the function information of the second network element, whether the second network element continues to be the selected network element. The following describes, with reference to FIG. 5, content in which the network device determines, based on the function information of the second network element, whether the second network element continues to be the selected network element.

FIG. 5 is a schematic flowchart of interaction of still another communication method according to an embodiment of this application. The method shown in FIG. 5 may be performed by a terminal device, a network device, an AMF (which is an example of a first network element), and an SMF (which is an example of a second network element), or may be performed by modules and/or devices (for example, a chip, an integrated circuit, or the like) that are installed in the terminal device, the network device, the AMF, and the SMF and that have corresponding functions. This is not limited. The following uses the terminal device, the network device, the AMF, and the SMF as an example for description. As shown in FIG. 5, the method comprises:
S501. The terminal device sends first information to the network device.

Correspondingly, the network device receives the first information.

S502. The network device sends the first information to the AMF.

Correspondingly, the AMF receives the first information.

For description of the first information, refer to the foregoing description. Details are not described again.

S503. The AMF determines an SMF.

For description of S503, refer to the foregoing description of S303. Details are not described again.

S504. The AMF sends identity information of the SMF and function information of the SMF to the network device.

Correspondingly, the network device receives the identity information of the SMF and the function information of the SMF.

S505. The terminal device sends fourth information and fifth information to the network device.

Correspondingly, the network device receives the fourth information and the fifth information. The fourth information is used for the first network element to perform network element selection. For description of the fourth information, refer to the foregoing description of the first information. Details are not described again. The fifth information is information that the terminal device intends to transmit.

S506. The network device determines, based on the fourth information and the function information of the SMF, whether the SMF is a network element continued to be selected.

Specifically, the network device may determine, based on the function information of the SMF and the fourth information, whether the SMF is the network element continued to be selected. For example, the function information of the SMF is used to indicate that the second network element supports function 1 and function 2, and the network device determines, based on the fourth information, that the terminal device intends to communicate with a network element supporting function 2. The network device may determine that the SMF is the network element continued to be selected. For example, the function information of the SMF is used to indicate that the SMF supports function 1 and function 2, and the network device determines, based on the fourth information, that the terminal device intends to communicate with a network element supporting function 3. The network device may determine that the SMF is not the network element continued to be selected.

In summary, when the network device determines, based on the function information of the SMF, that the SMF is the network element continued to be selected, the network device may not trigger the AMF to perform network element selection again. In this way, overall overhead when the AMF performs network element selection can be reduced.

In summary, when the terminal device sends the fourth information to the network device, the network device may determine, based on the fourth information and the function information of the second network element, whether the SMF can still meet the communication requirement of the terminal device. For example, the network device determines, based on the fourth information, that the network element with which the terminal device intends to communicate needs to support function 1, and the function information of the SMF indicates that the SMF also supports function 1. The network device may determine, based on this, that the SMF can still continue to meet the communication requirement of the terminal device, and therefore it is not necessary to trigger network element selection again. In this way, overall overhead in performing network element selection can be effectively reduced.

Optionally, the method may further comprise:
S507a. The network device sends the fifth information to the SMF.

When the network device determines, based on the fourth information and the function information of the SMF, that the SMF is the network element continued to be selected, the network device may directly send the fifth information to the SMF.

In summary, when the network device determines that the SMF can still meet the communication requirement of the terminal device, or in other words, when the network device determines that the SMF is the network element continued to be selected, the network device may directly send, to the SMF, the information that the terminal device intends to transmit to the second network element. In this way, it is not necessary to trigger the AMF to perform network element selection again, which can effectively reduce overall overhead in performing network element selection.

In this way, information exchange between the terminal device and the SMF can be completed.

Optionally, the method may further comprise:
S507b. The network device sends the fourth information to the AMF.

Correspondingly, the AMF receives the fourth information. The AMF may perform network element selection based on the fourth information, determine a corresponding network element, and feed back identity information and function information of the network element to the network device.

When the network device determines, based on the function information of the SMF, that the SMF is not the network element continued to be selected, the network device may send the fourth information to the AMF. The AMF may perform network element selection based on the fourth information, and feed back identity information and function information of the network element selected by the AMF to the network device. The network device forwards, based on the identity information of the network element selected by the AMF, the information that the terminal device intends to transmit to the network element.

In summary, when the network device determines that the SMF can no longer meet the communication requirement of the terminal device, or in other words, when the network device determines that the SMF is not the network element continued to be selected, the network device may trigger the AMF to perform network element selection again. In this way, communication between the terminal device and another network element can be supported.

In the embodiments of this application, in the solutions shown in FIG. 3 to FIG. 5, the first network element feeds back the function information of the network element selected by the first network element to the network device or the terminal device, and the terminal device or the network device determines, based on the function information of the network element, whether the network element is the network element continued to be selected. When the terminal device or the network device determines, based on the function information of the network element, that the network element is the network element continued to be selected, the terminal device or the network device determines that it is not necessary to trigger the first network element to perform network element selection again. In this way, overall overhead when the first network element performs network element selection can be effectively reduced.

In the embodiments of this application, the function information of the second network element may be used for the terminal device or the network device to determine whether to trigger the first network element to perform network element selection again. In other words, the terminal device or the network device may determine, based on the function information of the second network element fed back by the first network element, whether to trigger the first network element to perform network element selection again. In this way, overall overhead when the first network element performs network element selection can be effectively reduced. For example, when the network element with which the terminal device intends to communicate again is the same network element as the network element with which the terminal device communicated previously, the first network element does not need to perform network element selection again, which can prevent the first network element from performing unnecessary network element selection, thereby helping reduce overall overhead of the first network element.

Therefore, the function information of the second network element is only an example of information. The embodiments of this application do not limit other term names that may be used for the function information of the second network element.

In the embodiments of this application, the methods shown in FIG. 3 to FIG. 5 are described by taking an example in which the terminal device or the network device obtains the function information of the second network element in a process of interacting the first information with the first network element. The terminal device or the network device may also obtain the function information of the second network element through another approach. For example, after the first network element sends the identity information of the second network element to the network device, the first network element may send the function information of the second network element to the network device in another information interaction process with the network device, and so on. This is not limited.

In the embodiments of this application, after the network device or the terminal device obtains the function information of the second network element, the network device or the terminal device may determine, based on the function information of the second network element, whether to trigger the first network element to perform network element selection again. For example, after obtaining the first information or the fourth information, the network device determines, based on the first information or the fourth information and the function information of the second network element, whether the second network element can still meet the communication requirement of the terminal device, or determines that the second network element can still continue to serve as the selected network element. For another example, after obtaining the function information of the second network element, the terminal device determines, based on a communication requirement of the terminal device or a requirement for a function supported by the target network element and in combination with the function supported by the second network element, whether to trigger the first network element to perform network element selection again.

In summary, after the terminal device or the network device obtains the function information of the second network element, the terminal device or the network device may determine, based on the function information of the second network element, whether to trigger the first network element to perform network element selection again. When the terminal device or the network device determines, based on the function information of the second network element, that it is not necessary to trigger the first network element to perform network element selection again, this can reduce the number of times the first network element performs network element selection, thereby helping reduce overall overhead in performing network element selection.

The following describes apparatus embodiments corresponding to the method embodiments of this application. The following only briefly describes the apparatuses. For specific implementation steps and details of the solutions, refer to the foregoing method embodiments.

To implement the functions in the methods provided in this application, each of the terminal device, the network device, and the first network element may comprise a hardware structure and/or a software module, to implement the foregoing functions in the form of a hardware structure, a software module, or a hardware structure plus a software module. Whether a specific function among the foregoing functions is performed in the form of a hardware structure, a software module, or a hardware structure plus a software module depends on a specific application and design constraint of the technical solution.

FIG. 6 is a schematic block diagram of a communication apparatus according to an embodiment of this application. The communication apparatus comprises a processor 610 and a communication interface 620. The processor 610 and the communication interface 620 may be connected to each other through a bus 630. The communication apparatus may be a terminal device, or may be a network device, or may be a first network element.

Optionally, the communication apparatus may further comprise a memory 640. The memory 640 comprises, but is not limited to, a random access memory (random access memory, RAM), a read-only memory (read-only memory, ROM), an erasable programmable read only memory (erasable programmable read only memory, EPROM), or a compact disc read-only memory (compact disc read-only memory, CD-ROM). The memory 640 is configured to store related instructions and data.

The processor 610 may be one or more central processing units (central processing unit, CPUs). When the processor 610 is one CPU, the CPU may be a single-core CPU, or may be a multi-core CPU.

The processor 610 may be a signal processor, a chip, or another integrated circuit that can implement the method of this application, or a partial circuit used for a processing function in the foregoing processor, chip, or integrated circuit. In addition, the communication interface 620 may also be an input/output interface. The input/output interface is used for input or output of a signal or data, and may also be an input/output circuit.

When the communication apparatus is a terminal device, for example, the processor 610 is configured to perform the following operations: sending first information; receiving function information of a second network element and identity information of the second network element, and the like.

When the communication apparatus is a network device, for example, the processor 610 is configured to perform the following operations: sending first information; receiving function information of a second network element and identity information of the second network element, and the like.

When the communication apparatus is a first network element, for example, the processor 610 is configured to perform the following operations: receiving first information; sending function information of a second network element and identity information of the second network element, and the like.

The foregoing content is only an example description. When the communication apparatus is a terminal device, a network device, or a first network element, the communication apparatus is configured to perform the methods or steps related to the terminal device, the network device, or the first network element in the foregoing method embodiments.

When the communication apparatus is a terminal device, a network device, or a first network element, the communication interface 620 may also be referred to as a transceiver. The foregoing description is only an example description. For specific content, refer to the content shown in the foregoing method embodiments.

For implementation of the operations in FIG. 6, refer to the corresponding descriptions of the method embodiments shown in FIG. 3 to FIG. 5.

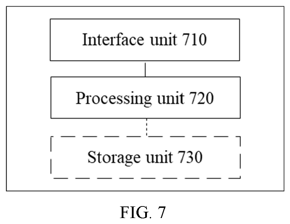

FIG. 7 is a schematic block diagram of another communication apparatus according to an embodiment of this application. The communication apparatus may be a terminal device, a network device, or a first network element, or may be a chip or a module in a terminal device, a network device, or a first network element, and is configured to implement the methods involved in the foregoing embodiments. The communication apparatus comprises an interface unit 710 and a processing unit 720. The following provides an example description of the interface unit 710 and the processing unit 720.

The interface unit 710 may comprise a sending unit and a receiving unit. The sending unit is configured to perform a sending action of the communication apparatus, and the receiving unit is configured to perform a receiving action of the communication apparatus. For ease of description, in the embodiments of this application, the sending unit and the receiving unit are combined into one interface unit. Unified description is provided herein, and details are not described below again.

When the communication apparatus is a terminal device, for example, the interface unit 710 is configured to send first information and receive function information of a second network element and identity information of the second network element, and the like. The processing unit 720 is configured to perform steps involving processing, coordination, and the like of the terminal device. For example, the processing unit 720 is configured to determine whether the second network element is a network element continued to be selected.

When the communication apparatus is a network device, for example, the interface unit 710 is configured to receive first information; further configured to send the first information; and further configured to receive function information of a second network element and identity information of the second network element, and the like. The processing unit 720 is configured to perform steps involving processing, coordination, and the like of the network device. For example, the processing unit 720 is configured to determine whether the second network element is a network element continued to be selected.

When the communication apparatus is a first network element, for example, the interface unit 710 is configured to receive first information; and further configured to send function information of a second network element and identity information of the second network element, and the like. The processing unit 720 is configured to perform steps involving processing, coordination, and the like of the first network element. For example, the processing unit 720 is configured to determine the second network element, and the like.

The foregoing content is only an example description. When the communication apparatus is a terminal device, a network device, or a first network element, the communication apparatus is configured to perform the methods or steps related to the terminal device, the network device, or the first network element in the foregoing method embodiments.

Optionally, the communication apparatus further comprises a storage unit 730. The storage unit 730 is configured to store a program or code for performing the foregoing methods.

The apparatus embodiments shown in FIG. 6 and FIG. 7 are used to implement the content described in FIG. 3 to FIG. 5. For specific execution steps and methods of the apparatuses shown in FIG. 6 and FIG. 7, refer to the content described in the foregoing method embodiments.

This application further provides a chip, comprising a processor, configured to invoke instructions stored in a memory from the memory and run the instructions, so that a communication device in which the chip is installed performs the methods in the foregoing examples.

This application further provides another chip, comprising: an input interface, an output interface, and a processor. The input interface, the output interface, and the processor are connected through internal connection paths. The processor is configured to execute code in a memory. When the code is executed, the processor is configured to perform the methods in the foregoing examples. Optionally, the chip further comprises a memory, and the memory is configured to store a computer program or code.

This application further provides a processor, configured to be coupled to a memory, and configured to perform the methods and functions involved in the network device or the terminal device in any one of the foregoing embodiments.

In another embodiment of this application, a computer program product comprising instructions is provided. When the computer program product is run on a computer, the methods in the foregoing embodiments are implemented.

This application further provides a computer program. When the computer program is run on a computer, the methods in the foregoing embodiments are implemented.

In another embodiment of this application, a computer-readable storage medium is provided. The computer-readable storage medium stores a computer program. When the computer program is executed by a computer, the methods described in the foregoing embodiments are implemented.

A person of ordinary skill in the art may be aware that, in combination with the examples of units and algorithm steps described in the embodiments disclosed in this specification, implementation may be performed by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for specific working processes of the systems, apparatuses, and units described above, refer to the corresponding processes in the foregoing method embodiments. Details are not described herein again.

In the several embodiments provided in this application, the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the technical solutions in the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the embodiments of this application essentially, or the part contributing to the prior art, or some of the technical solutions may be implemented in the form of a software product. The computer software product is stored in a storage medium and comprises several instructions for instructing a computer device (which may be a personal computer, a server, a network device, or the like) to perform all or some of the steps of the methods described in the embodiments of this application. The foregoing storage medium comprises: a USB flash drive, a removable hard disk, a ROM, a RAM, a magnetic disk, an optical disc, or any other medium that can store program code.

The foregoing descriptions are merely specific implementations of the embodiments of this application, but the protection scope of the embodiments of this application is not limited thereto. Any person skilled in the art may readily figure out variations or replacements within the technical scope disclosed in the embodiments of this application, and these variations or replacements shall fall within the protection scope of the embodiments of this application. Therefore, the protection scope of the embodiments of this application shall be subject to the protection scope of the claims.

## Claims

1. A communication method, wherein the method is applied to a network device and comprises:
sending first information to a first network element, wherein the first information is used to indicate information of a terminal device; and
receiving, from the first network element, identity information of a second network element and function information of the second network element, wherein the second network element is a network element selected by the first network element based on the information of the terminal device, and the function information of the second network element is used to indicate a function supported by the second network element.

2. The method according to claim 1, wherein that the function information of the second network element is used to indicate a function supported by the second network element comprises:
the function information of the second network element is used to indicate a condition under which the second network element is valid.

3. The method according to claim 1 or 2, wherein the function information of the second network element comprises at least one of the following:
a network slice allowed to be selected by the terminal device, a service type allowed to be selected by the terminal device, a service precision allowed to be selected by the terminal device, a quality of service allowed to be requested by the terminal device, a data network name allowed to be selected by the terminal device, or allowed location information of the terminal device.

4. The method according to any one of claims 1 to 3, wherein the method further comprises:
sending the identity information of the second network element and the function information of the second network element to the terminal device.

5. The method according to claim 4, wherein the method further comprises:
receiving, from the terminal device, second information, wherein the second information is used to indicate the identity information of the second network element; or
receiving, from the terminal device, third information, wherein the third information is used for the first network element to perform network element selection.

6. The method according to any one of claims 1 to 3, wherein the method further comprises:
determining, based on fourth information and the function information of the second network element, whether the second network element is a network element that is continued to be selected, wherein the fourth information is used for the first network element to perform network element selection, and the fourth information is from the terminal device.

7. The method according to claim 6, wherein the determining whether the second network element is a network element continued to be selected comprises:
determining that the second network element continues to be the selected network element, and sending fifth information to the second network element, wherein the fifth information is information that the terminal device needs to transmit to the second network element; or
determining that the second network element is not a network element continued to be selected, and sending the fourth information to the first network element.

8. The method according to any one of claims 1 to 7, wherein the information of the terminal device comprises at least one of the following:
a network slice selected by the terminal device, a service type selected by the terminal device, a service precision selected by the terminal device, a quality of service requested by the terminal device, a data network name selected by the terminal device, or location information of the terminal device.

9. The method according to any one of claims 1 to 8, wherein the identity information of the second network element comprises at least one of the following:
identification information of the second network element, an Internet Protocol address of the second network element, or a fully qualified domain name of the second network element.

10. A communication method, wherein the method is applied to a first network element and comprises:
determining a second network element; and
sending identity information of the second network element and function information of the second network element, wherein the function information of the second network element is used to indicate a function supported by the second network element.

11. The method according to claim 10, wherein the determining a second network element comprises:
receiving first information, wherein the first information is used to indicate information of a terminal device; and
performing network element selection based on the information of the terminal device, and determining the second network element.

12. The method according to claim 10 or 11, wherein that the function information of the second network element is used to indicate a function supported by the second network element comprises:
the function information of the second network element is used to indicate a condition under which the second network element is valid.

13. The method according to any one of claims 10 to 12, wherein the function information of the second network element comprises at least one of the following:
a network slice allowed to be selected by the terminal device, a service type allowed to be selected by the terminal device, a service precision allowed to be selected by the terminal device, a quality of service allowed to be requested by the terminal device, a data network name allowed to be selected by the terminal device, or allowed location information of the terminal device.

14. The method according to any one of claims 10 to 13, wherein the sending identity information of the second network element and function information of the second network element comprises:
sending the identity information of the second network element and the function information of the second network element to a terminal device; or
sending the identity information of the second network element and the function information of the second network element to a network device.

15. The method according to any one of claims 11 to 14, wherein the information of the terminal device comprises at least one of the following:
a network slice selected by the terminal device, a service type selected by the terminal device, a service precision selected by the terminal device, a quality of service requested by the terminal device, a data network name selected by the terminal device, or location information of the terminal device.

16. The method according to any one of claims 10 to 15, wherein the identity information of the second network element comprises at least one of the following:
identification information of the second network element, an Internet Protocol address of the second network element, or a fully qualified domain name of the second network element.

17. A communication method, wherein the method is applied to a terminal device and comprises:
sending first information, wherein the first information is used to indicate information of the terminal device; and
receiving identity information of a second network element and function information of the second network element, wherein the second network element is a network element selected by a first network element based on the information of the terminal device, and the function information of the second network element is used to indicate a function supported by the second network element.

18. The method according to claim 17, wherein that the function information of the second network element is used to indicate a function supported by the second network element comprises:
the function information of the second network element is used to indicate a condition under which the second network element is valid.

19. The method according to claim 17 or 18, wherein the function information of the second network element comprises at least one of the following:
a network slice allowed to be selected by the terminal device, a service type allowed to be selected by the terminal device, a service precision allowed to be selected by the terminal device, a quality of service allowed to be requested by the terminal device, a data network name allowed to be selected by the terminal device, or allowed location information of the terminal device.

20. The method according to any one of claims 17 to 19, wherein the method further comprises:
sending second information, wherein the second information is used to indicate the identity information of the second network element; or
sending third information, wherein the third information is used for the first network element to perform network element selection.

21. The method according to any one of claims 17 to 20, wherein the information of the terminal device comprises at least one of the following:
a network slice selected by the terminal device, a service type selected by the terminal device, a service precision selected by the terminal device, a quality of service requested by the terminal device, a data network name selected by the terminal device, or location information of the terminal device.

22. The method according to any one of claims 17 to 21, wherein the identity information of the second network element comprises at least one of the following:
identification information of the second network element, an Internet Protocol address of the second network element, or a fully qualified domain name of the second network element.

23. A communication system, comprising: a network device and a first network element, wherein
the network device is configured to send first information to the first network element, wherein the first information is used to indicate information of a terminal device;
the first network element is configured to receive the first information, and send, to the network device, identity information of a second network element and function information of the second network element, wherein the second network element is a network element selected by the first network element based on the information of the terminal device, and the function information of the second network element is used to indicate a function supported by the second network element; and
the network device is further configured to receive the identity information of the second network element and the function information of the second network element.

24. A communication apparatus, comprising a processor, wherein the processor is configured to, by executing a computer program or instructions, or by using a logic circuit,
enable the communication apparatus to perform the method according to any one of claims 1 to 9; or
enable the communication apparatus to perform the method according to any one of claims 10 to 16; or
enable the communication apparatus to perform the method according to any one of claims 17 to 22.

25. A communication apparatus, comprising a logic circuit and an input/output interface, wherein the input/output interface is configured to input and/or output a signal, and
the logic circuit is configured to perform the method according to any one of claims 1 to 9; or
the logic circuit is configured to perform the method according to any one of claims 10 to 16; or
the logic circuit is configured to perform the method according to any one of claims 17 to 22.

26. A computer-readable storage medium, wherein the computer-readable storage medium stores a computer program or instructions, and when the computer program or the instructions are run on a computer,
the method according to any one of claims 1 to 9 is performed; or
the method according to any one of claims 10 to 16 is performed; or
the method according to any one of claims 17 to 22 is performed.

27. A computer program product, comprising instructions, wherein when the instructions are run on a computer,
the method according to any one of claims 1 to 9 is performed; or
the method according to any one of claims 10 to 16 is performed; or
the method according to any one of claims 17 to 22 is performed.

28. A chip system, wherein the chip system comprises a processor, a memory, and an input/output port, the memory is configured to store a computer program, and the processor is configured to execute the computer program stored in the memory,
so that the processor performs the method according to any one of claims 1 to 9; or
so that the processor performs the method according to any one of claims 10 to 16; or
so that the processor performs the method according to any one of claims 17 to 22.
